(19) Europäisches Patentamt
European Patent Office
Office européen des brevets

(11) **EP 4 082 509 A1**

(12) **EUROPEAN PATENT APPLICATION**
published in accordance with Art. 153(4) EPC

(43) Date of publication:
**02.11.2022 Bulletin 2022/44**

(21) Application number: **20905457.6**

(22) Date of filing: **23.12.2020**

(51) International Patent Classification (IPC):
**A61H 3/04** (2006.01)    **B60L 7/18** (2006.01)
**B60T 17/18** (2006.01)    **B62B 3/00** (2006.01)
**B62B 5/04** (2006.01)    **B60T 8/17** (2006.01)
**B60T 8/1755** (2006.01)    **B60T 8/96** (2006.01)

(52) Cooperative Patent Classification (CPC):
**A61H 3/04; B60L 7/18; B60T 8/17; B60T 8/1755;
B60T 8/96; B60T 17/18; B62B 3/00; B62B 5/04**

(86) International application number:
**PCT/JP2020/048150**

(87) International publication number:
**WO 2021/132325 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2019 JP 2019235276**

(71) Applicant: **Nabtesco Corporation
Tokyo 102-0093 (JP)**

(72) Inventor: **HASHIMOTO, Hiroaki
Tokyo 102-0093 (JP)**

(74) Representative: **Grünecker Patent- und
Rechtsanwälte
PartG mbB
Leopoldstraße 4
80802 München (DE)**

(54) **ELECTRIC BRAKING MECHANISM-EQUIPPED VEHICLE, WHEEL UNIT, AND CONTROL PROGRAM FOR WHEEL UNIT**

(57)    A conventional electrically controlled vehicle has one control unit in the vehicle body and electrically controls the braking force of each wheel by the control unit. An electrically controlled vehicle includes: a rear wheel 13R and a rear wheel 13L; a braking mechanism 105R configured to apply braking force to the wheel 13R; a sensor group 103R configured to detect at least one of the acceleration and angular velocity of the rear wheel 13R; a calculation unit 107R configured to calculate the braking force applied by the braking mechanism 105R based on a detected value from the sensor group 103R; a control unit 101R configured to control the braking mechanism 105R based on a calculation result from the calculation unit 107R; a braking mechanism 105L configured to apply braking force to the wheel 13L; a sensor group 103L configured to detect at least one of the acceleration and angular velocity of the rear wheel 13L; a calculation unit 107L configured to calculate the braking force applied by the braking mechanism 105L based on a detected value from the sensor group 103L using the same algorithm as that used by the calculation unit 107R; and a control unit 101R configured to control the braking mechanism 105R based on a calculation result from the calculation unit 107R.

FIG.3

**Description**

[TECHNICAL FIELD]

The present invention relates to electric braking mechanism-equipped vehicles, wheel units, and control programs for wheel units.

[BACKGROUND ART]

In the related art, electrically controlled vehicles for assisting the walking of elderly people and people with weak leg strength are known (see, for example, Patent Literature 1). An electrically controlled vehicle is used together with a pedestrian (user) at the time of walking.

[Patent Literature 1] Japanese Patent Application Publication NO. 2016-187485

[SUMMARY OF INVENTION]

[TECHNICAL PROBLEM]

An electrically controlled vehicle described in Patent Literature 1 has one control unit in the vehicle body and electrically controls the braking force of each wheel by the control unit. In this case, it is necessary to extend the wiring from the control unit in the vehicle body to the vicinity of each wheel. The wiring problem is considered to be caused using a so-called central control method in which a single control unit controls the braking force of each wheel.

[SOLUTION TO PROBLEM]

One embodiment of the present invention includes: a first wheel and a second wheel provided on respective sides of a vehicle body in a vehicle width direction; a first braking mechanism configured to apply braking force to the first wheel on one side in a vehicle width direction; a first detection unit configured to detect at least one of the acceleration and angular velocity of the first wheel; a first calculation unit configured to calculate the braking force applied by the first braking mechanism based on a detected value from the first detection unit; a first control unit configured to control the first braking mechanism based on a calculation result from the first calculation unit; a second braking mechanism configured to apply braking force to the second wheel on the other side in the vehicle width direction; a second detection unit configured to detect at least one of the acceleration and angular velocity of the second wheel; a second calculation unit configured to calculate the braking force applied by the second braking mechanism based on a detected value from the second detection unit using the same algorithm used by the first calculation unit; and a second control unit configured to control the second braking mechanism based on a calculation result from the second calculation unit.

[BRIEF DESCRIPTION OF DRAWINGS]

FIG. 1 is a perspective view of a walker according to one embodiment of the present invention;
FIG. 2 is a side view of a walker 100 according to FIG. 1;
FIG. 3 is a block diagram of a control system;
FIG. 4 is a block diagram of the control system;
FIG. 5 is a diagram schematically showing a user walking on a downward inclination while pushing a walker;
FIG. 6 is a graph showing an example of braking force information;
FIG. 7 is a graph showing chronological change of a pitch angle $\theta$ when the walker travels on a downward inclination;
FIG. 8 is a graph showing chronological change of the pitch angle $\theta$;
FIG. 9 is a graph showing chronological change of the pitch angle $\theta$;
FIG. 10 is a schematic top view of the walker;
FIG. 11 is a graph showing the relationship between the threshold of a fall braking force and the velocity $V_m$ of the body of the vehicle;
FIG. 12 is a schematic top view of the walker; and
FIG. 13 is a block diagram of the control system.

[DESCRIPTION OF EMBODIMENTS]

Hereinafter, an electrically controlled vehicle according to an embodiment of the present invention will be described with reference to the drawings. In the following explanation, the same reference numerals are assigned to the same configurations, and repetitive explanations will be omitted. In the following embodiment, as the electrically controlled vehicle, for example, a walker configured to assist the elderly in walking will be illustrated. However, as the electrically controlled vehicle, at least any vehicle whose braking force is controlled by electric power can be adopted. The electrically controlled vehicle is driven by rotating the wheels using force input by actions such as pushing by the user to the vehicle as a main driving force. Examples of such an electrically controlled vehicle include a wheelchair, a stroller, and a trolley for transporting a load in addition to a walker.

To clarify the following explanations, first an explanation will be given regarding the meaning of terms used in the following explanations. A braking mechanism includes a mechanical braking mechanism and an electric braking mechanism in the present specification. The mechanical braking mechanism reduces the rotational speed of a wheel by bringing a friction element such as a brake shoe into contact with the wheel or axle through operation intentionally performed by the user. The electric braking mechanism reduces the rotational speed of the wheel by collecting kinetic energy generated by wheel rotation through electrical control without operation intentionally performed by the user. The electric braking mechanism also includes a braking mechanism configured to rotationally drive the motor in a direction opposite to the normal driving direction to reduce the rotational speed of the wheel. Further, in the present specification, the term "electrically controlled vehicle" means a vehicle equipped with at least an electric braking mechanism. Therefore, even if an electric braking mechanism is the only element controlled by electricity in the entire vehicle, the vehicle is included in electrically controlled vehicles. In the present specification, a forward direction and a backward direction may be used as terms indicating directions. The forward direction means a direction of advancing the vehicle in a normal use state of the vehicle, and the backward direction means a direction of moving the vehicle forward in a normal use state of the vehicle.

In the present specification, the terms "pitch angle", "roll angle", and "yaw angle" may also be used as terms that indicate the posture of the vehicle body. The "pitch angle" means an angle around an axis (pitch axis) extending in the vehicle width direction. The "roll angle" means an angle around an axis (roll axis) extending in the front-rear direction of the body of the vehicle. The "yaw angle" means an angle around an axis (yaw axis) extending in the vertical direction of the body of the vehicle. A rotational motion around the pitch axis may be referred to as "vertical sway", a rotational motion around the roll axis may be referred to as "horizontal sway", and a rotational motion around the yaw axis may be referred to as "turning". In the following, a target of a motion may be referred to as the "vehicle body" or "wheels". However, since the vehicle body and wheels are considered as rigid bodies, the velocity and acceleration of the vehicle body and the velocity and acceleration of the wheels are considered to be the same when no turning is involved. The inclination angle of a road surface means the inclination angle of a travel surface on which the vehicle body is traveling. The inclination angle of the road surface is estimated to be the same as the inclination angle of the vehicle body and is indicated by the angle around the pitch axis or the roll axis or by the combination of the angles around the pitch axis and the roll axis.

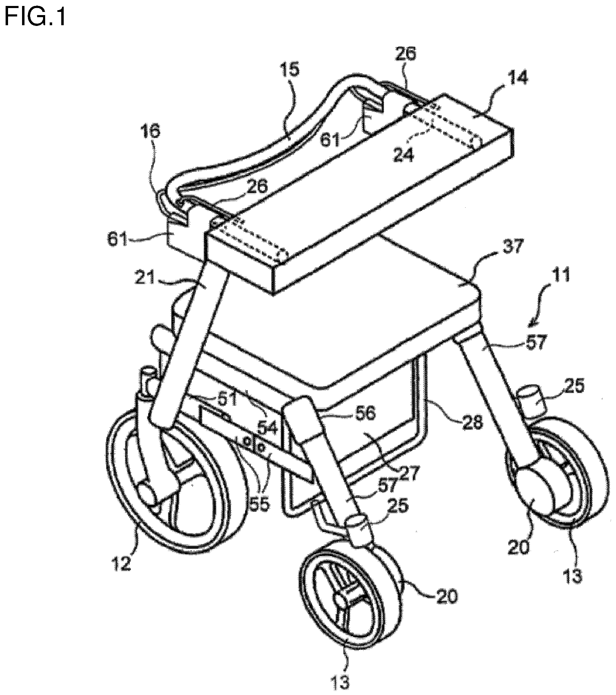

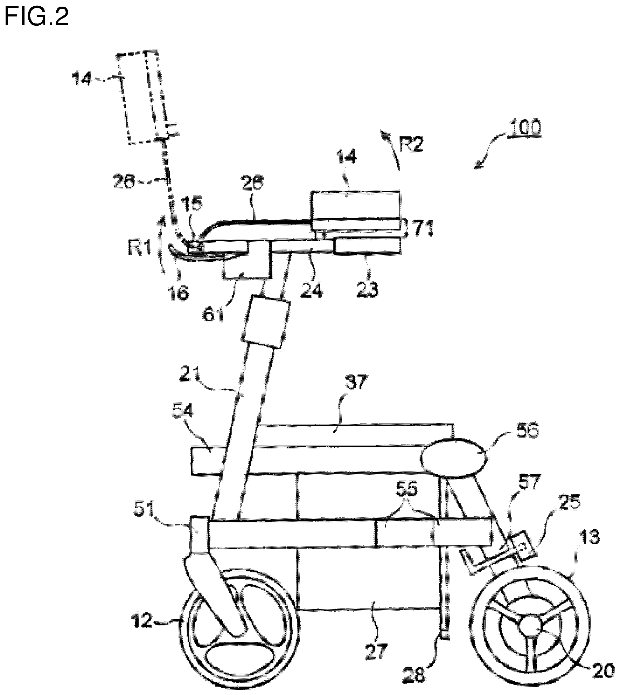

FIG. 1 is a perspective view of a walker according to one embodiment of the present invention. FIG. 2 is a side view of a walker according to FIG. 1. As shown in FIGS. 1 and 2, the walker 100 includes a main body frame 11 that constitutes the vehicle body, a pair of front wheels 12 and a pair of rear wheels 13 provided on the main body frame 11, and a support pad (body support part) 14 provided on the main body frame 11. The pair of front wheels 12 are formed, for example, using casters that can freely change direction around the vertical axis. The pair of rear wheels 13 are arranged such that the axles are aligned on the same straight line. The walker 100 assists the walking of an elderly person or a person with weak leg strength. When using the walker 100, while putting his/her forearm or elbow on the support pad 14 and applying the weight (load) to the support pad 14, the user applies force to the walker 100 by pushing a handlebar 15 while grasping the handlebar 15 and a brake lever 16 to perform a walking motion. Therefore, the handlebar 15 serves as a receiver configured to receive force from the user, and the walker 100 moves by the force received by the receiver.

The main body frame 11 includes a pair of support frames 21 that are inclined by a predetermined angle from a direction perpendicular to the placement surface of the walker 100. The support frames 21 are formed using pipe-shaped members as an example. A pair of lower frames 51 are being horizontally provided on the lower end side of the support frames 21. A pair of front wheels 12 are being attached to the front end side of the lower frames 51. A pair of link mechanisms 55 are being provided on the rear end side of the lower frames 51.

A pair of upper frames 54 are being provided above the pair of lower frames 51. One end side of each of a pair of rear wheel frames 57 is being rotatably connected to the rear end side of each of the upper frames 54 via a shaft 56. A pair of rear wheels 13 are being provided on the other end side of the rear wheel frame 57, respectively.

A pair of handles 24 are being provided at the respective upper ends of the pair of support frames 21. The pair of handles 24 are provided substantially in a horizontal manner with respect to the placement surface of the walker 100.

The pair of handles 24 are formed using pipe-shaped members as an example. Each of the pair of handles 24 is being provided with a grip 23 (see FIG. 2) held by the user to stabilize the posture when the user is sitting. Further, on the front side of the pair of handles 24, a pipe-shaped handlebar 15 integral with the handles 24 is being formed. One end of the handlebar 15 is being connected to one of the pair of handles 24, and the other end of the handlebar 15 is being connected to the other handle 24. The handlebar 15 may be formed of a member different from the handles 24.

A pair of mechanically contactable brake shoes 25 (omitted in FIG. 1, see FIG. 2) are being provided on the outer circumference of the pair of rear wheels 13. The brake shoes 25 are connected to one end of a brake wire (not shown) arranged in the main body frame 11. The other end of the wire is connected to a wire connection mechanism of a pair of brake units 61 provided on respective sides of the handlebar 15. Although the wire is stored in the main body frame 11, the wire may be provided outside the main body frame such that the wire is visible to the user in appearance.

A brake lever 16 is being arranged in the lower front direction of the handlebar 15 so as to face the handlebar 15. The respective ends of the brake lever 16 are connected to the pair of brake units 61. The respective ends of the brake lever 16 are being attached to the brake units 61 via a biasing means such as a winding spring. The user can apply a mechanical braking force by pulling the brake lever 16 toward the user (in the direction of arrow R1 in FIG. 2) by wire action. In other words, the brake shoes 25 can be controlled through the operation of the brake lever 16.

At the time of use, the user pulls the brake lever 16 toward the user (in a direction closer to the handlebar 15) to a brake operating position. The action of the wire connected to the brake lever 16 causes the brake shoes 25 to move such that the brake shoes 25 press the outer circumference of the rear wheels 13. Thereby, a mechanical braking force is applied. When the user releases the brake lever 16, the brake lever 16 returns to the original position (normal position). Along with this, the brake shoes 25 are also separated from the rear wheels 13, and the mechanical braking force is released. Further, the brake lever 16 is designed to be able to be lowered in the opposite direction (lower side) of the arrow R1. By lowering the brake lever 16 to a parking position, a parking brake is applied that maintains a state in which the rear wheels 13 are being pressed by the brake shoes 25 via the wire action.

By lowering the brake lever 16 to a parking position, a parking brake is applied that maintains a state in which the rear wheels 13 are being pressed by the brake shoes 25 via the wire action. The support pad 14 is a form of body support configured to support a portion of the user's body. In the present embodiment, a form of use is assumed where the user's forearms, elbows, or both of the forearms and the elbows are supported. However, another form of use where another part of the body, such as the chin, hand, or chest, is supported is also possible.

Between the handles 24 and the support pad 14, a detection mechanism 71 (see FIG. 2) is provided for detecting whether the walker 100 is being used for walking by the user. More specifically, the detection mechanism 71 detects whether a load (weight) is applied to the support pad 14 by the user or whether the user is in contact with the support pad 14.

The shape of the support pad 14 is a horseshoe shape as an example but is not limited to this shape, and the shape may be any other shape. As an example, the support pad 14 is formed by placing a cushion material such as a sponge or a rubber material on a plate material such as a wooden plate or a resin plate and covering these materials with an arbitrary covering material made of resin or cloth. However, the configuration is not limited to this configuration and may be any other configuration.

A pair of arm members 26 are being fixed, each on one end side, to the respective lateral sides of the lower surface of the support pad 14. The arm members 26 are rotatably being attached, each on the other end side, to the outside of the pair of handlebars 15, respectively. When the user pushes (strikes) the support pad 14 upward, the support pad 14 rotates in the direction of an arrow R2 in FIG. 2 and is fixed at a predetermined position (retracting position) (see a virtual line in FIG. 2). A space for accommodating the upper body of the user is secured above a seat 37. In this state, the user can sit on the seat 37 with the support pad 14 on the back side while holding the pair of grips 23 with both hands. By holding the grips 23, the user can stabilize his/her posture when the user is sitting. In this way, the support pad 14 prevents the user from sitting on the seat 37 of the walker at a position obtained before being pushed up (normal position) and allows the user to sit on the seat 37 of the walker at a position obtained after being pushed up (retracting position).

The configuration in which the user manually pushes up the support pad 14 is shown here. However, as another example, a configuration may be employed where a lock mechanism (not shown) is provided such that the support pad 14 is automatically pushed up by releasing the fixation by the lock mechanism. Alternatively, a configuration may be employed where an electric mechanism (motor or the like) for rotating the arm members 26 is provided such that the support pad 14 is pushed up by operating the electric mechanism through the activation of the switch.

A storage 27 (see FIG. 2) is being provided so as to be suspended between the pair of upper frames 54. The storage 27 has a bag shape with an open upper part and can store baggage inside the storage 27. The storage 27 may be made of resin or fabric. The seat 37 described above is provided as a lid for the storage 27.

Behind the storage 27, a lever 28 extending downward from the pair of upper frames 54 is provided. The lever 28 is located in a position that allows the user to step on the lever 28 with his/her leg. When the user lowers the lever 28, the link mechanisms 55 are folded such that the pair of rear wheel frames 57 and the pair of rear wheels 13 approach the pair of front wheels 12. As a result, the walker 100 can be folded.

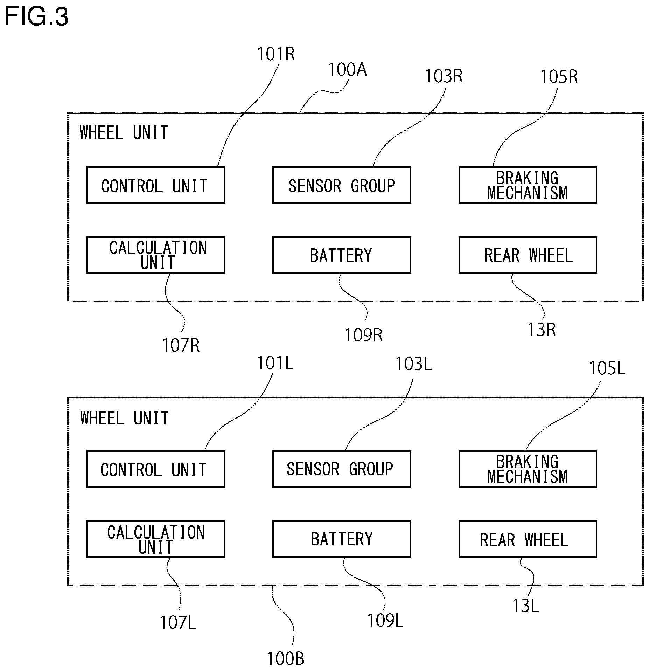

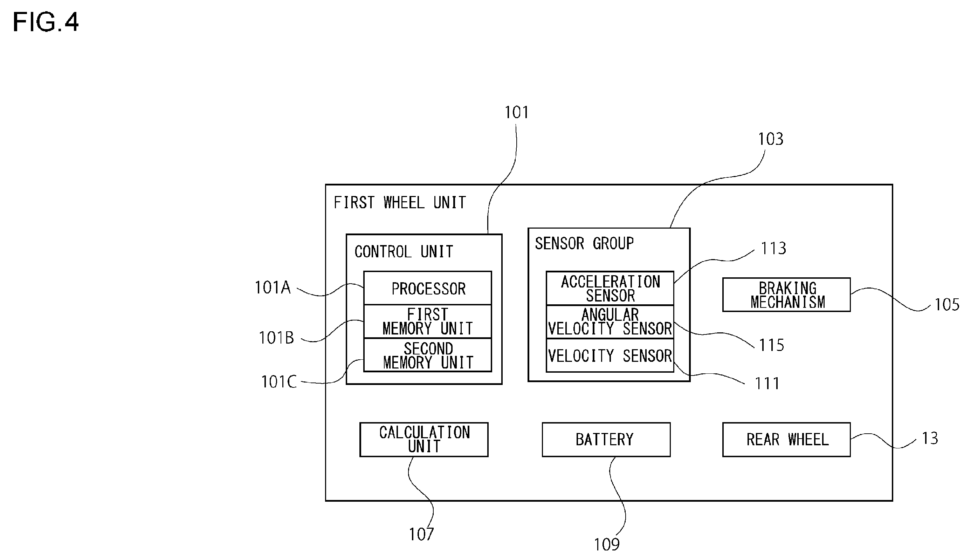

FIGS. 3 and 4 are block diagrams of a control system. As shown in FIGS. 3 and 4, the walker 100 includes two wheel units 100A and 100B. Since the respective configurations of the two wheel units 100A and 100B are identical, no clear distinction will be made below unless particularly necessary. The wheel unit 100A, which is one of the wheel units, is a unit, for example, that encompasses a right rear wheel 13 and includes a control unit 101R configured to control a rear wheel 13R, a sensor group 103R configured to detect the state of one of the rear wheels 13, a braking mechanism 105R configured to exert braking force on the rear wheel 13R, and a calculation unit 107R configured to calculate the braking force. The wheel unit 100B is a configured to encompass a left rear wheel 13L and includes a control unit 101L configured to control a rear wheel 13L, a sensor group 103L configured to detect the state of the rear wheel 13L, a braking mechanism 105L configured to exert braking force on the rear wheel 13L, and a calculation unit 107L configured to calculate the braking force. The control units 101R and 101L operate independently of each other, the sensor groups 103R and 103L operate independently of each other, the braking mechanisms 105R and 105L operate independently of each other, and the calculation units 107R and 107L operate independently of each other. Therefore, for example, the wheel units 100A and 100B do not have a communication means for each other. By making the control units 101R and 101L, etc., independent of each other as described, for example, the control unit 101R, the sensor group 103R, the braking mechanism 105R, and the calculation unit 107R can be housed in a single housing and integrated with the rear wheel 13R. This eliminates the need for providing wiring or a communication means between the wheel units 100A and 100B and allows the rear wheel 13, the control unit 101R, the sensor group 103R, the braking mechanism 105R, and the calculation unit 107R to form an independent unit. The control unit 101R and the control unit 101L have the same configuration, the sensor group 103R and the sensor group 103L have the same configuration, the braking mechanism 105R and the braking mechanism 105L have the same configuration, and the calculation unit 107R and the calculation unit 107L have the same configuration. Therefore, in the following, the control unit 101R and the control unit 101L may be collectively referred to as "control units 101". In the same way, the sensor group 103R and the sensor group 103L, the braking mechanism 105R and the braking mechanism 105L, or the calculation unit 107R and the calculation unit 107L may be referred to as sensor groups 103, braking mechanisms 105, or calculation units 107, respectively.

One wheel unit includes a control unit 101, a sensor group 103, a braking mechanism 105 and a battery 109. The walker 100 supplies various information detected by the sensor group 103 to the control unit 101. The control unit 101 processes the information supplied by the sensor group 103 to control the braking mechanism 105.

[Braking mechanism]

A braking mechanism 105 is connected to the axle of a rear wheel 13 and controls the rotational speed of the rear wheel 13 based on control performed by a control unit 101. As the braking mechanism 105, an electric braking mechanism such as a motor is used. In a walker that can electrically control a friction element such as a brake shoe, the friction element may be used as the braking mechanism 105. The braking mechanism 105 functions as an electrical braking mechanism configured to control the rotational speed of the rear wheel 13. The braking mechanism 105 rotates due to the kinetic energy generated by the rotation of the rear wheel 13. The rotation of the braking mechanism 105 allows for the collection of the kinetic energy and suppresses the rotational speed of the rear wheel 13, allowing the braking mechanism 105 to generate braking force on the rear wheel 13. The kinetic energy collected by the braking mechanism 105 is stored in the battery 109. Therefore, the braking mechanism 105 functions as a regenerative or power generation brake. If the battery 109 can be charged using an external power source, it is not necessary to charge the battery 109 by the braking mechanism 105, and a brake configured to collect and consume kinetic energy such as an eddy current brake or electromagnetic retarder may be used as an electric braking mechanism. A servo motor, a stepping motor, an AC motor, a DC motor, or the like is used as the motor used as a regenerative brake.

[Battery]

The battery 109 is electrically connected to the control unit 101 and supplies electric power for the driving of the control unit 101. Further, the battery 109 may be electrically connected to each sensor of the sensor group 103 to supply electric power for driving the sensor group 103. As the battery 109, a secondary battery such as a lithium-ion battery or a capacitor (condenser) can be used. The battery 109 may be a battery that is rechargeable using an external power source or may be a battery that is charged using only the electrical energy collected by the braking mechanism 105.

[Sensor group]

The sensor group 103 has a plurality of sensors and transmits a detection result from each sensor to the control unit 101. The sensor group 103 includes an angular velocity sensor 111 configured to detect the angular velocity of the rear wheel 13 around the pitch, roll, and yaw axes, an acceleration sensor 113 configured to detect the acceleration of the vehicle body around the pitch, roll, and yaw axes, and a velocity sensor 115 configured to detect the rotational speed of the rear wheel 13. As the angular velocity sensor 111 and the acceleration sensor 113, a 6-axis inertial sensor in which these two sensors are combined may be used. The detection result from each sensor is transmitted to the control unit 101 as a signal by a wired or wireless method. A magnetic field sensor may also be used instead of the acceleration sensor.

Based on a detected value obtained by the sensor group 103, the control unit 101 determines the turning of the vehicle body, the vertical sway of the vehicle body, the inclination angle of the vehicle body around the pitch axis, the horizontal sway of the vehicle body, and the inclination angle of the vehicle body around the roll axis. Therefore, the control unit 101 and the angular velocity sensor 111 form a turning detection unit configured to detect the turning of the vehicle body. Further, the control unit 101 and the angular velocity sensor 111 form a lateral inclination detection unit configured to detect the inclination angle and horizontal sway of the vehicle body around the roll axis. Also, the control unit 101 and the angular velocity sensor 111 form first and second inclination detection units configured to detect the inclination angle and vertical sway of the vehicle body around the pitch axis. The control unit 101 calculates the inclination angle by integrating a detection result from the angular velocity sensor 111. The method of detecting the turning, etc., of the vehicle body based on the turning, etc., of the wheel will be described later.

[Control unit and calculation unit]

The control unit 101 controls the braking force by controlling the braking mechanism 105. The calculation unit 107 calculates the braking force using a predetermined program and algorithm under the control of the control unit 101. The control unit 101 includes hardware such as a processor 101A configured to perform various arithmetic processing such as a micro processing unit (MPU), a first memory unit 101B including nonvolatile memory configured to store information and instructions, and a second memory unit 101C including a temporary memory used for arithmetic operations performed by the processor. The calculation unit 107 has a similar hardware configuration as that of the control unit 101. Therefore, from a hardware perspective, the calculation unit 107 may be part of the control unit 101. However, since the control unit 101 and the calculation unit 107 have different functions, the block diagrams in FIGS. 3 and 4 make a clear distinction between the two. The first memory unit 101B stores a program executed by a processor for the control unit 101 to control the walker 100, an algorithm used by this program to issue various commands, and the like. Also, the first memory unit 101B stores values detected by the sensor group 103 over time as necessary. As an example, the chronological change of the pitch angle is stored in the first memory unit 101B as a detection history. If it is not necessary to continuously keep the detection history of the detected values from the sensors, the detection history may be temporarily stored in the second memory unit 101C.

The control unit 101 is electrically connected to the battery 109, and electric power for driving each piece of hardware is supplied from the battery 109. The control unit 101 causes the calculation unit 107 to calculate the braking force using the detection result obtained from each sensor and, if necessary, the detection history stored in the first memory unit 101B. The control unit 101 controls the braking force caused by the braking mechanism 105 based on the result calculated by the calculation unit 107. More specifically, the control unit 101 causes the calculation unit 107 to calculate the size of the braking force using the detection result obtained from each sensor and transmits a resistance value necessary to generate the braking force to the braking mechanism 105, thereby controlling the braking force.

Hereinafter, a specific control process of the electric braking mechanism of the braking mechanism 105 performed by the control unit 101 and the calculation unit 107 will be explained. In the following explanation, the operation mainly performed by the control unit 101 is realized by the control unit 101 causing the calculation unit 107 or the like to refer to instructions and information stored in the memory and execute arithmetic operations on the temporary memory by the processor. During the following control, the control units 101 provided respectively for the pair of rear wheels 13 determine whether or not each of the control units 101 independently operates an electric braking mechanism using the same algorithm without performing any communication and determine the strength of the braking force. The same algorithm means an algorithm for performing arithmetic operations regularly using the same calculation principle. In the following examples, the sign of a value used in an arithmetic operation may be an opposite sign due to the positional relationship with the axis of rotation, etc., or a function for the distance to a reference point may be changed when the arithmetic operation is performed based on the reference point. Even with such differences, those algorithms are considered as the same algorithms as long as the arithmetic operation principle is the same.

[Control during turning]

For example, the braking force may always be increased when the vehicle body is turning in order to suppress the swerving of the vehicle body on level ground. Since the user may intentionally turn the vehicle body, the strength of the braking force applied during turning is preferably of an extent that can be overpowered by the user.

In order to suppress swerving on level ground, the control unit 101 needs to determine whether the control unit 101 is on the outer wheel side of the turn or the inner wheel side of the turn. In this case, the control unit 101 determines the position of the control unit 101 based on the value of angular velocity $\omega$ around the yaw axis. For example, when counterclockwise is defined as $+\omega$ when viewed from the top, if a detected value from a right angular velocity sensor is positive, the control unit determines that the control unit is on the outer wheel side and, on the contrary, if the detected value is negative, the control unit determines that the control unit is on the inner wheel side.

When a change in angular velocity around the yaw axis is detected by the angular velocity sensor 111 and the acceleration sensor 113 while the vehicle is traveling on level ground (or approximate level ground), the control unit 101 applies a weak braking force to the rear wheel 13 on the inner wheel side and a strong braking force to the rear wheel 13 on the outer wheel side. This prevents swerving on level ground. When turning, the braking force of the rear wheel 13 on the inner wheel side needs to be weaker than that of the rear wheel 13 on the outer wheel side, and the exertion of the braking force by the rear wheel 13 on the inner wheel side may be suppressed such that the value of the braking force of the rear wheel 13 on the inner wheel side becomes zero.

[Inclination braking force]

As an example, the control unit 101 applies an inclination braking force when the road surface on which the walker 100 is traveling has a downward inclination of a predetermined angle or less to suppress the velocity of the walker 100. Since the presence or absence of a downward inclination is determined based on the pitch angle of the vehicle body, the inclination braking force is, in other words, a pitch angle braking force. The control unit 101 acquires detected values from the angular velocity sensor 111 and the acceleration sensor 113 and continuously monitors the detected values. When the inclination braking force is applied, for example, the braking mechanism 105 generates braking force to suppress the rotational velocity of the rear wheel 13. This suppresses the velocity of the walker 100, enhancing safety. As another example, the control unit 101 may produce an inclination braking force when the walker 100 continues to travel on an inclination of a predetermined angle or less for a predetermined distance. As another example, the control unit 101 may produce an inclination braking force when the walker 100 continues to travel on an inclination of a predetermined angle or less for a predetermined period of time.

The strength of the inclination braking force can be determined, for example, according to the angle of the inclination. In this case, the control unit 101 and the calculation unit 107 are made to calculate the inclination angle based on the acceleration around the roll axis and the angular velocity around the pitch axis. The steeper the inclination angle (the smaller the inclination angle with respect to the horizontal plane), the higher the value of the braking force set by the calculation unit 107. By using the same algorithm for the left and right control units 101, the same inclination braking force is exerted on the left and right rear wheels 13.

The strength of the inclination braking force may be corrected according to the change in the pitch angle over time. In this case, the control unit 101 stores the detection history over time of the pitch angle in particular from the detection results from the sensor group 103 in the second memory unit 101C. The control unit 101 corrects the inclination braking force based on the detection history of the pitch angle.

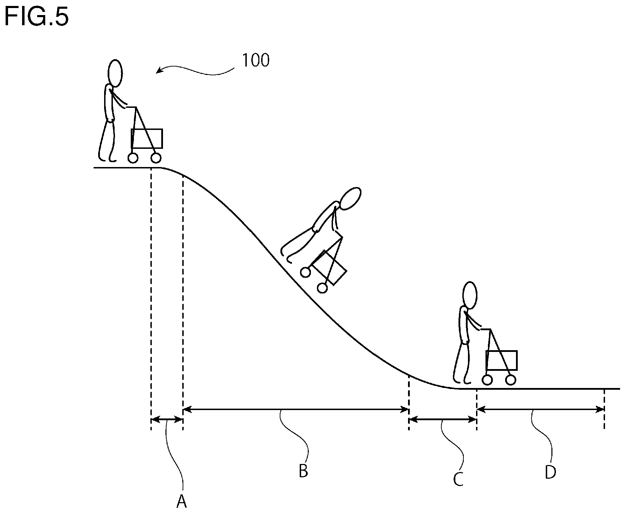

FIG. 5 is a diagram schematically showing a user walking downhill while pushing a walker. The control unit 101 changes braking force at a scene when the travel surface changes from level ground to a downward inclination (region A in FIG. 5), a scene during which the vehicle is traveling on a downward inclination with no angle change (region B in FIG. 5), a scene when the travel surface changes from a downward inclination to level ground (region C in FIG. 5), and a scene occurring for a certain period of time after the travel surface changes from a downward inclination to level ground (region D in FIG. 5).

The control unit 101 stores braking force information indicating the correlation between the pitch angle $\theta$ and the braking force Fb in the first memory unit 101B. The method of determining the pitch angle $\theta$ will be described later. The braking force information in information that indicates that a specific braking force Fb should be applied for a specific pitch angle $\theta$. Therefore, the control unit 101 refers to the braking force information to read out the braking force Fb corresponding to the pitch angle $\theta$ and then controls the braking mechanism 105 based on the value of the read-out braking force Fb.

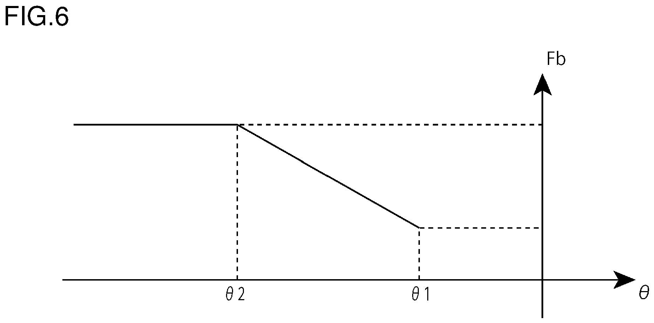

FIG. 6 is a graph showing an example of the braking force information. In FIG. 6, the vertical axis indicates the braking force Fb, and the horizontal axis indicates the pitch angle $\theta$. The pitch angle $\theta$ indicates the angle with respect to the horizontal plane (zero degrees). As mentioned above, since the pitch angle $\theta$ of the vehicle body is estimated to substantially correspond to the inclination angle of the road surface on which the vehicle is traveling, the pitch angle $\theta$ in this case can be considered to substantially indicate the inclination angle of the road surface. Therefore, this means that the smaller the pitch angle $\theta$ is, the steeper the downhill on which the vehicle is traveling.

As shown in FIG. 6, when the pitch angle $\theta$ is equal to or less than a value of zero and is equal to or greater than $\theta 1$, the calculation unit 107 sets the braking force Fb to zero. This is because since a minute inclination may result from an unevenness of the road surface, the braking force Fb is not applied every time a minute unevenness occurs. When the pitch angle $\theta$ is less than a value of $\theta 1$ degrees and is equal to or greater than a value of $\theta 2$ degrees, the calculation unit 107 increases the braking force Fb as the pitch angle $\theta$ decreases. When the pitch angle $\theta$ is less than

the value of θ2, the braking force Fb has a constant value (maximum value). By setting a maximum value for the braking force Fb, locking of the rear wheel 13 is prevented. This can prevent the rear wheel 13 from slipping and prevent the rear wheel 13 from stopping while causing the vehicle to be unable to go downhill. In the example in FIG. 6, when the pitch angle is equal to or less than zero and is equal to or greater than θ1, the braking force Fb is not generated. However, if necessary, a weak braking force Fb may be generated.

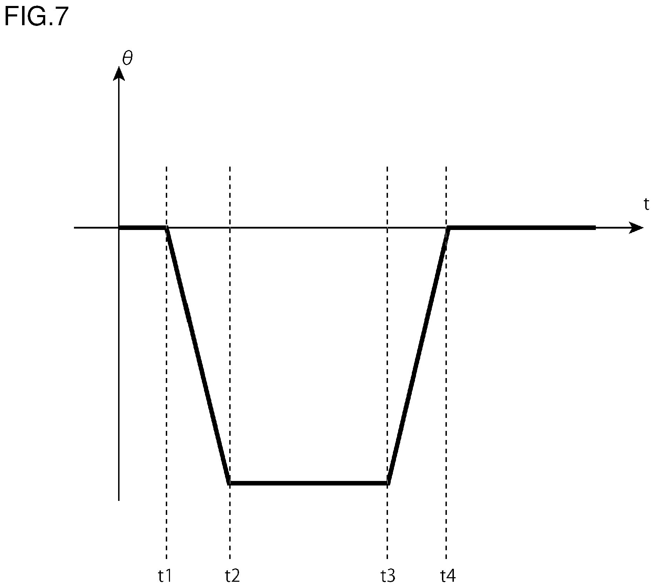

FIG. 7 is a graph showing chronological change of the pitch angle θ when the walker travels on a downward inclination. More specifically, FIG. 7 shows the chronological change of the actual measured value of the pitch angle θ while the walker 100 is traveling on a downward inclination shown in FIG. 5. The actual measured value of the pitch angle θ is a calculated value calculated based on the detection result from the acceleration sensor 113. As shown in FIG. 7, when a travel road surface changes from level ground to a downward inclination at time t1, the actual measured value of pitch angle θ begins to decrease. While the walker 100 is traveling on an inclination with no angle change from time t2 to time t3, the actual measured value of the pitch angle θ remains constant. At time t4, when the travel road surface changes from a downward inclination to level ground, the actual measured value of the pitch angle θ begins to increase. At and after the time t4, the actual measured value of pitch angle θ remains constant while the walker 100 is traveling on level ground. If the braking force information is applied directly according to the change in the pitch angle θ, a sudden change in the braking force Fb occurs at the time t1 and the time t3. Further, when the travel road surface changes from a downward inclination to level ground at the time t4, the braking force Fb is suddenly released (Fb = 0). When the braking force Fb is suddenly released, the walker 100 may suddenly accelerate. In order to prevent these problems, the calculation unit 107 uses a corrected value of the pitch angle θ instead of the actual measured value of the pitch angle θ when calculating the braking force Fb.

The calculation unit 107 applies two types of delay filters with different time constants to the actual measured value of the pitch angle θ and calculates two corrected values. The calculation unit 107 uses the smaller of the two calculated corrected values as the corrected value for the pitch angle θ. Next, the calculation unit 107 refers to the braking force information and reads out the value of the braking force Fb corresponding to the corrected value of the pitch angle θ. The read-out value represents the braking force Fb that is transmitted to the braking mechanism 105. For example, low-pass filters using a moving average or a smoothing average can be used as the delay filters. An example of the low-pass filters using an exponentiated average is shown in the following Expressions 1 and 2.

[Expression 1]

$$\theta_{slow} = \frac{\theta + (\alpha - 1)\,\theta_{slow-1}}{\alpha}$$

[Expression 2]

$$\theta_{fast} = \frac{\theta + (\beta - 1)\,\theta_{fast-1}}{\beta}$$

where the value of $\theta_{slow-1}$ indicates the calculated value of one $\theta_{slow}$ before, and the value of $\theta_{fast-1}$ indicates the calculated value of one $\theta_{fast}$ before. Further, in Expressions 1 and 2, a time constant $\alpha$ is less than a time constant $\beta$. The time constant $\alpha$ represents the reaction speed when the inclination angle of the travel road surface decreases substantially. The time constant $\beta$ represents the speed of recovery when the inclination angle of the travel road surface increases substantially.

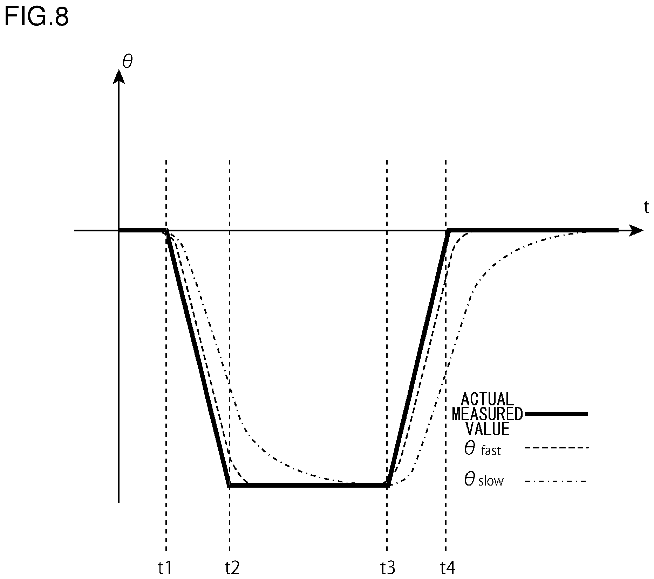

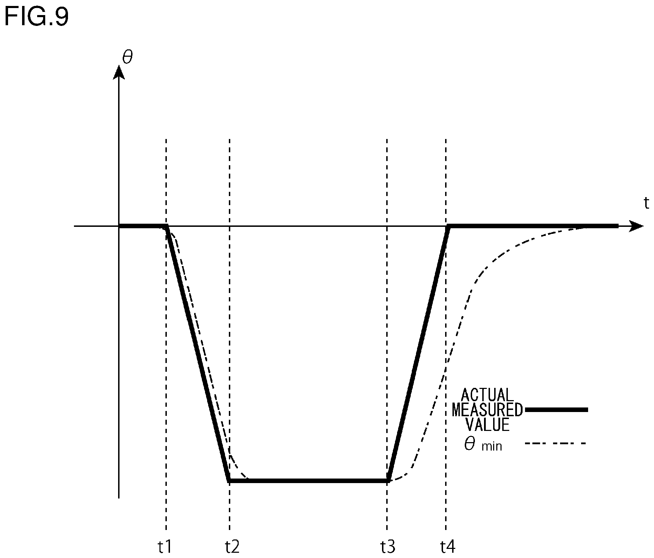

FIGS. 8 and 9 are graphs showing chronological change of the pitch angle θ. More specifically, FIG. 8 is a graph obtained by adding the value of $\theta_{slow}$ and the value of $\theta_{fast}$ calculated in the above Expressions 1 and 2 to FIG. 7. As shown in FIG. 8, the occurrence of the pitch angle $\theta_{slow}$ and the occurrence of the pitch angle $\theta_{fast}$ are delayed relative to the occurrence of the actual measured value of the pitch angle θ. The amount of delay of the pitch angle $\theta_{slow}$ is larger than that of the pitch angle $\theta_{fast}$. As the corrected value of the pitch angle θ, the calculation unit 107 uses a pitch angle $\theta_{min}$, which is one of the pitch angle $\theta_{slow}$ and the pitch angle $\theta_{fast}$ obtained by the Expressions 1 and 2 that has a smaller value at each time point. The corrected value of the pitch angle θ is the value of the pitch angle θ used by the calculation unit 107 when referring to the braking force information. Therefore, the calculation unit 107 reads out the braking force Fb corresponding to the corrected value of the pitch angle θ from the braking force information and transmits the read-out braking force Fb to the motor. The calculated pitch angle $\theta_{fast}$ and pitch angle $\theta_{slow}$ are stored in the memory and managed as a change history. The stored values are used for the next calculation of a pitch angle $\theta_{fast+1}$ and a pitch

angle $\theta_{slow+1}$.

FIG. 9 is a graph obtained by adding the corrected value of the pitch angle $\theta$ to FIG. 7. As shown in FIG. 9, between time t1 and time t3, the value of the pitch angle $\theta_{fast}$ is used as the corrected value for the pitch angle $\theta$. After the time t3, the value of the pitch angle $\theta_{slow}$ is used as the corrected value for the pitch angle $\theta$. In other words, when the travel road surface changes from level ground to a downward inclination, the value of pitch angle $\theta_{fast}$, which has a smaller time constant, is used as the corrected value for the pitch angle $\theta$. This allows a value of the pitch angle $\theta$ with less delay to be used in a scene where a sudden increase in the braking force Fb is desired. When the travel road surface changes from a downward inclination to level ground, the value of the pitch angle $\theta_{slow}$, which has a large time constant, is used as the corrected value for the pitch angle $\theta$. This allows the braking force Fb to be reduced slowly.

Focusing on the corrected value for the pitch angle $\theta$ at and after the time t3, it can be found that the amount of increase in the corrected value for the pitch angle $\theta$ becomes smaller (the inclination is decreasing) at and after an inflection point. Referring to the braking force information shown in FIG. 6, the gradual amount of increase in the corrected value for the pitch angle $\theta$ means that the amount of decrease in the braking force Fb is reduced over time. Therefore, by using the corrected value for the pitch angle $\theta$, the amount of decrease in the braking force Fb per unit time can be reduced. Thereby, between the latter half of a region C and a region D, the braking force Fb is not released immediately (Fb does not become zero) and is gradually reduced. This prevents rapid acceleration of the walker 100 at and after the time t3, especially at time t4.

Focusing on the corrected value for the pitch angle $\theta$ in a region A and the corrected value for the pitch angle from a region C to a region D, it can be found that the absolute value of the amount of change is larger in the latter. The absolute value of the amount of change in this case means the amount of delay (the amount of shift along the horizontal axis) relative to the actual measured value of the pitch angle $\theta$. Due to this magnitude relationship in the amount of delay, the braking force Fb can be rapidly increased in a scene where the braking force Fb is required to decelerate the walker 100 due to a decrease in the inclination angle of the travel road surface. In a scene where the inclination angle of the travel road surface increases such that it is no longer necessary to decelerate the walker 100, the braking force Fb can be gradually reduced. The control unit 101 provides an appropriate braking force Fb corresponding to the inclination angle of the travel road surface through continuous control using two types of low-pass filters with different time constants.

By using two low-pass filters, it is not necessary to keep referring to the change history of the inclination angle of the travel road surface while controlling the braking force Fb. In other words, it is not necessary for the control unit 101 to detect and determine whether the inclination angle of the travel road surface is increasing or decreasing. This is because, by using two low-pass filters, the absolute value of the amount of change in the pitch angle $\theta$ substantially reflects the condition of the travel road surface. As described above in relation to the region A, when the inclination angle of the travel road surface is decreasing, the absolute value of the amount of change in the pitch angle $\theta$ becomes relatively small. As described above in relation to the regions C and D, when the inclination angle of the travel road surface is increasing, the absolute value of the amount of change in the pitch angle $\theta$ becomes relatively large. Therefore, the calculation unit 107 can calculate an appropriate braking force Fb corresponding to the inclination angle of the travel road surface without detecting and determining an increase or decrease in the inclination angle of the travel road surface. Further, since the corrected value for the pitch angle $\theta$ is a continuous value, a sudden increase and decrease of the braking force Fb can be suppressed.

As mentioned above, the delay filters do not necessarily have to be low-pass filters using an exponentiated average, and other filters may be used. In this case, the delay filters have two different types of amounts of delay as two different types of time constants.

Although the low-pass filters described above are for calculating the corrected value for the pitch angle $\theta$, delay filters configured to correct the braking force Fb may also be used. In this case, the calculation unit 107 determines the braking force Fb based on the braking force information from the actual measured value of the pitch angle $\theta$. The calculation unit 107 applies two delay filters with different time constants to the determined braking force Fb. The calculation unit 107 sets the smaller of the two corrected values for the braking force Fb obtained by applying the delay filters as the braking force Fb, and the control unit 101 transmits the smaller corrected value to the motor. This method has the same effect as correcting the pitch angle $\theta$.

When the same braking force is applied to the left and right rear wheels 13 according to the inclination angles as described above, the respective inclination angles need to be detected simultaneously. However, if there is unevenness of the road surface or the timing of activating the control unit 101 is off, the timing of detecting the inclination may become off. It is possible that the vehicle body turns when the walker 100 get on a downward inclination from level ground and the inclination braking force is applied. In this case, the inclination detection by the control unit 101 or sensor group 103 corresponding to the rear wheel 13 on the outer wheel side at the time of the turning may have delayed. In this case, the calculation unit 107 on the outer wheel side subtracts the inclination angle according to the angular velocity around the yaw axis. In other words, the calculation unit 107 on the outer wheel side increases the braking force on the assumption that the vehicle is traveling on an inclination with a smaller inclination angle than that of the road surface on which the vehicle is actually traveling. This prevents sudden turns due to the timing of the action of the inclination braking force being off.

It is possible that the vehicle body turns when the walker 100 gets on a downward inclination from level ground and the inclination braking force is released. In this case, the inclination detection by the control unit 101 or sensor group 103 corresponding to the inner wheel side at the time of the turning may have delayed. In this case, the calculation unit 107 on the inner wheel side adds the inclination angle according to the angular velocity around the yaw axis. In other words, the calculation unit 107 on the inner wheel side reduces the braking force on the assumption that the vehicle is traveling on an inclination with a larger inclination angle than that of the road surface on which the vehicle is actually traveling. This prevents sudden turning caused due to the timing of the release of the inclination braking force being off.

[Velocity braking force]

As an example, the control unit 101 activates the velocity braking force by suppressing the velocity when the velocity of the walker 100 reaches a predetermined level or more. The timing for applying the velocity braking force is when the detected value of the velocity sensor 115 reaches a predetermined threshold value or more. The calculation units 107 calculate the velocity of the vehicle body based on the same algorithm, and the strength of the velocity braking force is determined based on the calculated value. Therefore, the strength of the velocity braking force is a function of the velocity of the vehicle body. In this case, the control unit 101 acquires the detected value from the velocity sensor 115 and monitors the detected value. When the velocity braking force is applied, for example, the braking mechanism 105 generates braking force to suppress the rotational velocity of the rear wheels 13. This suppresses the velocity of the walker 100 and improves safety.

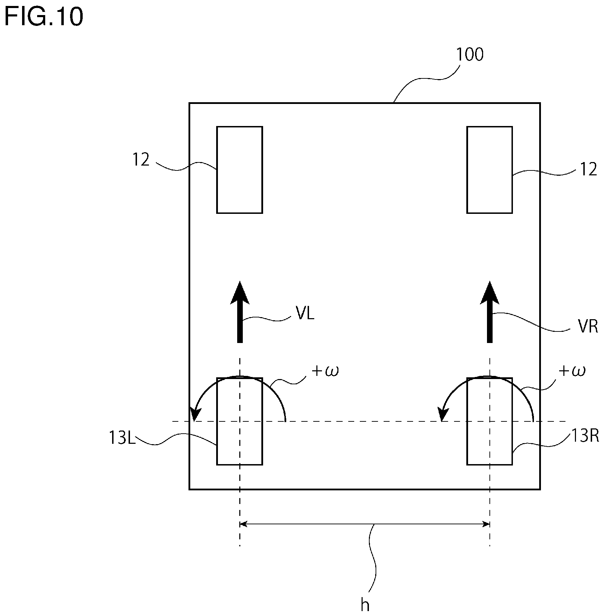

FIG. 10 is a schematic top view of the walker. As shown in FIG. 10, given that the angular velocity of the rear wheels 13 around the yaw axis in the counterclockwise direction is $+\omega$, the velocity VR of the right rear wheel 13R can be calculated by the calculation unit 107 of the left rear wheel 13L by using the following Expression (3).

$$V_R \ = \ V_L \ + \ \omega_L h \qquad\qquad (3)$$

where h represents the distance between the rear wheels 13L and 13R.

The angular velocity $\omega_L$ is a value that the calculation unit on the side that performs the calculation (in this example, the calculation unit 107 associated with the left rear wheel 13) has. In the case where there is no turning, since the angular velocity $\omega_L$ has a value of zero, the velocity $V_R$ and the velocity $V_L$ become equal to each other. The velocity V of the other one of the pair of the rear wheels 13 can be calculated using the Expression (3). It is not necessary to use the Expression (3) if an algorithm is used that allows the same braking force to be obtained by the left and right calculation units 107.

In order to make the respective velocity braking forces acting on the two rear wheels 13 the same, the strength of the braking forces needs to be calculated based on the velocity of the vehicle body. The velocity of the vehicle body means the velocity at an arbitrary point. The arbitrary point is preferably any point in a space occupied by the vehicle body and is more preferably the center point between the rear wheels 13 (hereinafter simply referred to as "the center of the vehicle body"). Based on the Expression (3), the velocity $V_m$ at the center of the vehicle body can be calculated using the following Expression (4).

$$V_m \ = \ V_L \ + \ \omega_L h/2 \ = \ V_R \ - \ \omega_R h/2 \qquad\qquad (4)$$

Since the strength of a velocity braking force represents a function that is determined according to the velocity, the strength BV of the velocity braking force can be expressed as shown in the following Expressions (5) and (6) .

$$BV_L \ = \ F(V \ + \ \omega_L h/2) \qquad (5)$$

$$BV_R \ = \ F(V \ - \ \omega_R h/2) \qquad (6)$$

Therefore, the calculation unit 107 corresponding to the left rear wheel 13 calculates the strength of the velocity braking force based on the Expression (5). Further, the calculation unit 107 corresponding to the right rear wheel 13 calculates the strength of the velocity braking force based on the Expression (6).

However, even if the condition for applying the velocity braking force is achieved, if the angular velocity sensor detects turning, the braking force may be applied according to the velocity. In this case, the strength of the braking force is preferably proportional to the velocity. Therefore, the braking force of the rear wheel 13 traveling on the outer wheel side of the turn becomes stronger, and the braking force of the rear wheel 13 traveling on the inner wheel side becomes weaker. The values obtained in the Expressions (5) and (6) may be corrected according to the velocity.

[Fall braking force]

As an example, the control unit 101 suppresses the velocity of the walker 100 when there is a high possibility that the user will fall and applies the fall braking force. Since the likelihood of a fall is determined based on the acceleration of the vehicle body, the fall braking force corresponds to the acceleration braking force.

The control unit 101 suppresses the velocity of the walker 100 when there is a high possibility that the user will fall and applies the fall braking force. When the user falls while the walker 100 is traveling on level ground, the acceleration of the walker 100 tends to increase rapidly. Therefore, the control unit 101 applies the fall braking force when the acceleration of the walker 100 reaches a predetermined threshold or more on the assumption that the user may fall. The threshold for the fall braking force is managed by the control unit 101 and is changed according to the velocity.

A fall braking force needs to be applied simultaneously at the left and right rear wheels 13 in order to control the turning of the vehicle body. Therefore, the calculation unit 107 compares the acceleration of the vehicle body with the threshold to determine whether or not to apply the fall braking force. The acceleration of the vehicle body can be calculated from the velocity Vm of the vehicle body in the above Expression (4) and is expressed as shown in the following Expression (7).

$$A_m = A_L + \omega' h/2 = A_R - \omega' h/2 \qquad (7)$$

The left and right calculation units 107 calculate the acceleration Am of the vehicle body based on the Expression (7) and apply the fall braking force when the acceleration Am of the vehicle body exceeds the threshold.

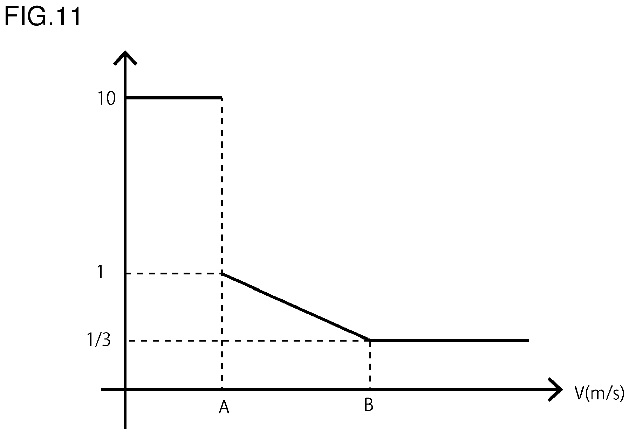

FIG. 11 is a graph showing the relationship between the threshold of the fall braking force and the velocity $V_m$ of the vehicle body. FIG. 11 shows the threshold of the acceleration $A_m$ in the vertical axis and shows the velocity $V_m$ of the walker 100 in the horizontal axis. As shown in FIG. 11, the threshold of the acceleration $A_m$ becomes relatively high when the current velocity $V_m$ of the walker 100 is low, and the threshold of the acceleration $A_m$ becomes relatively low when the current velocity $V_m$ of the walker 100 is high. In the example shown in the figure, the threshold of the acceleration $A_m$ is gradually reduced in a medium velocity region as the velocity increases. The calculation unit 107 refers to a detected value from the velocity sensor 115 and reads a threshold corresponding to the velocity $V_m$ that has been detected. The calculation unit 107 then sets the read threshold as a threshold for applying the fall braking force. The calculation unit 107 continues the series of threshold changing processes at least while the walker 100 is moving forward.

A threshold in a low velocity region is set relatively high considering the acceleration when the user intentionally wishes rapid acceleration of the walker 100. Also, it can be considered that the acceleration $A_m$ of the walker 100 does not become so high and does not change much even when the user is about to fall while the walker 100 is traveling at a high speed. Therefore, a threshold in a high velocity region should be set relatively lower than that in the low velocity region. In the example shown in the figure, a region with a velocity less than a velocity V1 is defined as a low velocity region, a region with a velocity less than a velocity V2 is defined as a medium velocity region, and a region with the velocity V2 or more is defined as a high velocity region. Given that the threshold for the acceleration at the time of the velocity V1 is set to one, the threshold for the acceleration in the low velocity region with a velocity less than the velocity V1 is set to, for example, ten. In the medium velocity region, the threshold for the acceleration gradually decreases to 1/3 as the velocity increases. In the high velocity region, the threshold for the acceleration is set to 1/3.

In the example shown in the figure, the thresholds are substantially separated into three stages: a high velocity region; a medium velocity region; and a low velocity region. Alternatively, the thresholds may be separated into two stages: a threshold in a high velocity region; and a threshold in a low velocity region. In this case, the calculation unit 107 may perform, for example, twostep control of setting a threshold for the high velocity region during normal driving in advance and relatively increasing the threshold when the velocity is lower than a predetermined value.

It is also necessary to reduce the fall braking force simultaneously at the left and right rear wheels 13. As an example, the calculation unit 107 may set the fall braking force to a value of zero based on the elapsed time after the braking force is enhanced by the fall braking force. In this case, the calculation unit 107 starts measuring the time when the braking force is enhanced by the fall braking force, and the calculation unit 107 releases the fall braking force and reduces the braking force after a threshold for a predetermined time (e.g. 0.2 seconds) has passed. The calculation unit 107 assumes that the user has regained his/her stance after the fall braking force of the walker 100 is applied for a certain period of time. By releasing the fall braking force at this point in time, the user can be prevented from starting to push the walker 100 with braking force that has been increased by the fall braking force. Associating the control for reducing the fall braking force with the elapsed time allows for simultaneous reduction in fall braking force in the left and right calculation units 107.

When the same braking force is applied to the left and right rear wheels 13 according to the accelerations as described above, the respective accelerations need to be detected simultaneously. However, slippage of the rear wheels 13 may cause the timing of acceleration detection to be off. It is possible that the vehicle body turns when braking force is applied based on acceleration. In this case, there is a possibility that the rear wheel 13 on the outer wheel side at the time of the turning may have slipped and the sensor group 103 may have failed to detect the change in the acceleration. In this case, the control unit 101 on the outer wheel side compares the acceleration in the direction of travel with the threshold for the acceleration, and if the acceleration is slightly below the threshold (e.g., 90% of the threshold is reached), the control unit 101 on the outer wheel side applies a fall braking force, assuming that the rear wheel 13 on the outer wheel side has slipped. In this case, the threshold for the acceleration corresponds to a first threshold value, and a value of 90 percent of the threshold corresponds to a second threshold value.

Further, it is possible that the vehicle body turns when the fall braking force is reduced. In this case, there is a possibility that the timing for reducing the braking force of the rear wheel 13 on the inner wheel side at the time of the turning has been off. In this case, the control unit 101 on the inner wheel side reduces the braking force immediately regardless of preset timing for reducing the braking force.

[One-side inclination traveling]

Application of any of velocity braking force, inclination braking force, and fall braking force while the user is walking and crossing an inclined plane while pushing the walker causes the vehicle body to easily swerve. Crossing an inclined plane means that the vehicle is traveling without following the inclination, and the roll angle is other than zero degrees while the vehicle is traveling on the inclined plane. While crossing the inclined plane, the walker 100 can easily turn particularly toward the downward inclination direction due to the effect of the inclined plane. To prevent the walker 100 from turning, while the control unit 10 of the rear wheel 13 on the upper side of the inclination needs to exert a stronger braking force, the control unit 101 of the rear wheel 13 on the lower side of the inclination needs to exert a weaker braking force.

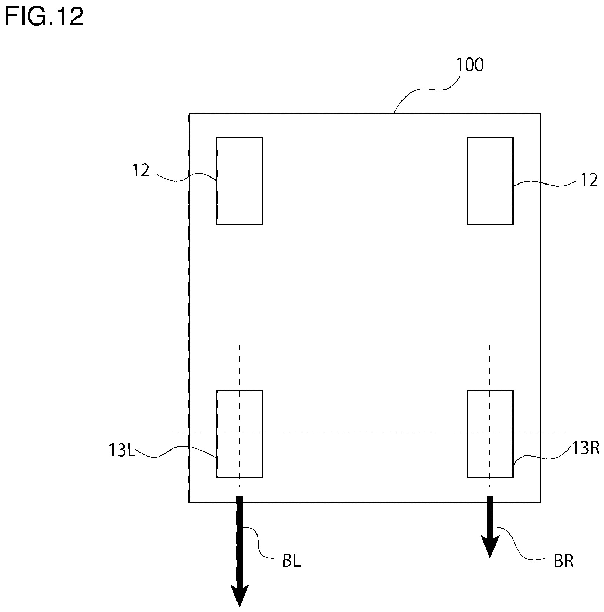

FIG. 12 is a schematic top view of the walker. In the example shown in FIG. 12, the left side of the vehicle body is on the outer wheel side at the time of the turning, and the right side is on the inner wheel side at the time of the turning. In this case, taking into account the inclination angle of the inclined plane, the control unit 101 controls a braking force BL on the upper side of the inclination and a braking force BR on the lower side of the inclination to cancel the moment applied to the center of gravity of the vehicle body. In this case, the braking force BL on the upper side of the inclination is preferably larger than the braking force BR on the lower side of the inclination.

[Assist control]

The walker 100 may also include an assist function for assisting in the acceleration of the walker 100. In this case, the braking mechanism 105 is formed using a motor. The calculation unit 107 calculates assist force based on the acceleration in the forward direction of the walker 100 detected by the acceleration sensor 113. The calculation unit 107 calculates the assist force to be generated by the motor and controls the motor based on the calculated value. The motor applies the assist force to the rear wheels 13 based on the control performed by the control units 101 to apply driving power to the walker 100. The control unit 101 may increase or decrease the assist force based on whether or not there is an upward inclination that is based on a detected value from the angular velocity sensor 111, an estimated value of traveling resistance obtained by a traveling resistance calculation unit (not shown), and the like.

In the above example, braking forces such as a velocity braking force, a pitch angle braking force, and an acceleration braking force are calculated according to the travel road surface and traveling statuses. If conditions for applying multiple types of braking forces are met, the control unit 101 preferably applies the strongest braking force among a plurality of braking forces calculated by taking into account a plurality of braking forces such as a velocity braking force, a pitch angle braking force, and an acceleration braking force.

As described above, the walker 100 adjusts the braking force of the electric braking mechanism according to the conditions, etc., of the travel road surface detected by the sensor group 103 using the independent left and right control units 101. Further, by making the left and right control units 101 and the like independent of each other, there is no need to apply complicated wiring as in the central control system. By unitizing the control system of each rear wheel as in the wheel units 100A and 100B, wiring can be further reduced. Also, by unitizing the control system without using a central control system, the wheel units can be easily replaced when one of the wheel units breaks down.

Next, the second embodiment will be explained. The walker 100 according to the second embodiment differs from that according to the above embodiment mainly in that the two control units have a communication means for each other.

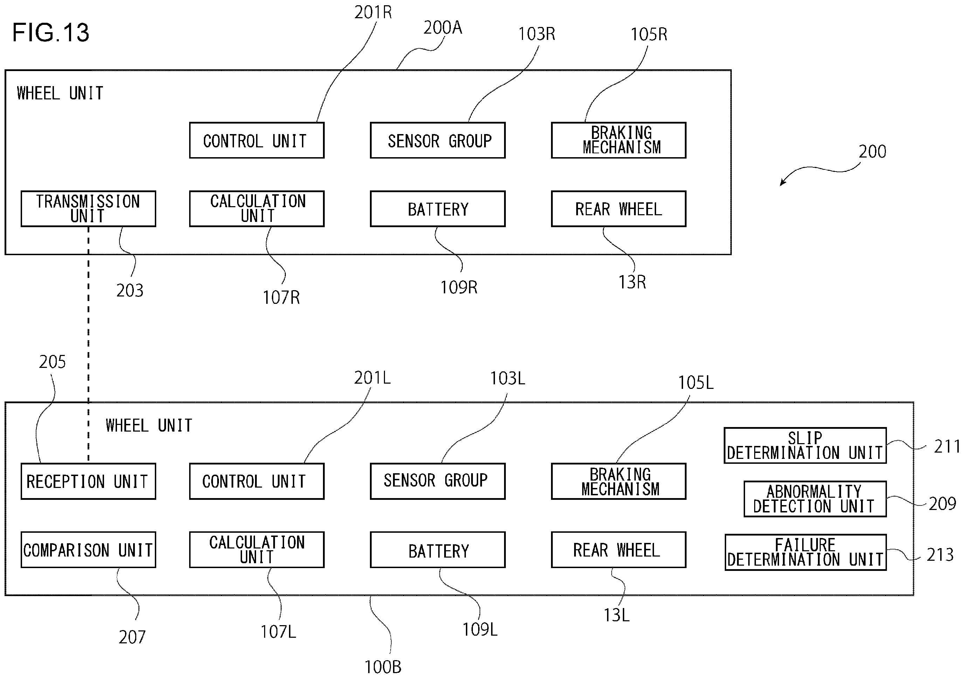

FIG. 13 is a block diagram of a walker according to the second embodiment. The configuration of a sensor group 103, a braking mechanism 105, and rear wheels 13 are the same as those described above. Thus, a detailed explanation thereof will be omitted.

As shown in FIG. 13, a walker 200 includes a wheel unit 200A including a left rear wheel 13L and a wheel unit 200B that including a right rear wheel 13R. The wheel unit 200A includes a control unit 201 and a transmission unit 203 in addition to a sensor group 103, a braking mechanism 105, and the rear wheel 13L. The control unit 201L basically has the same configuration as that of a control unit 101. However, a program that is stored is different. More specifically, the program stored in the control unit 201L causes the transmission unit 203 to transmit the value of a braking force calculated by the control unit 201L or a detected value from the sensor group 103. The transmission unit 203 transmits specified information to the other wheel unit 200B.

The wheel unit 200B includes a control unit 201R, a reception unit 205 capable of communicating with the transmission unit 203, a comparison unit 207, an abnormality detection unit 209, a slip determination unit 211, and a failure determination unit 213 in addition to a sensor group 103, a braking mechanism 105, and the rear wheel 13R. The control unit 201R basically has the same configuration as that of a control unit 101. However, a program that is stored is different. More specifically, the program stored in the control unit 201L causes the comparison unit 207 to compare the value of a braking force calculated by the control unit 201R with the value of a braking force received by the reception unit 205. Further, based on the comparison result from the comparison unit, the program stored in the control unit 201L causes the abnormality detection unit 209 to detect an abnormality of the wheel unit 200A, and causes the slip determination unit 211 to determine whether slipping of the rear wheel 13R has occurred, and causes the failure determination unit 213 to determine if there is a failure in the wheel unit 200A.

The comparison unit 207 compares the braking force calculated by the wheel unit 200A with the braking force calculated by the wheel unit 200B. Except for certain cases such as at the time of turning, the values of the respective braking forces calculated by the two control units 201L and 201R are preferably the same. However, if the two braking forces are found to be different as a result of the comparison, the occurrence of an abnormality, etc., can be estimated. Further, as mentioned above, for example, the wheel unit 200B can use the detection result from the own sensor group 103 to calculate a calculated value that would be calculated by the wheel unit 200A. The comparison unit 207 may compare this calculated value with a calculated value received from the wheel unit 200A. Further, the comparison unit 207 may compare the detected value received from the wheel unit 200A with the detected value from the sensor group 103 of the wheel unit 200B. By using the comparison unit 207, for example, the braking force calculated by the wheel unit 200A and the braking force calculated by the wheel unit 200B can be checked against each other, so to speak.

The abnormality detection unit 209 detects abnormality of the wheel unit 200A based on the comparison result from the comparison unit 207. For example, when the walker 200 is traveling on level ground, the respective velocity braking forces should match between the wheel unit 200A and the wheel unit 200B. If the comparison result shows that the velocity braking forces do not match, the abnormality detection unit 209 determines that some kind of abnormality has occurred. In the determination of the occurrence of an abnormality by the abnormality detection unit 209, it is not necessary that the comparison result shows that the velocity braking forces match perfectly, and errors may be allowed. When the abnormality detection unit 209 determines that an abnormality has occurred, the abnormality detection unit 209 may notify the user of the occurrence.

Based on the comparison result of the detected values by the comparison unit 207 or the comparison result of the calculated braking forces, the slip determination unit 211 determines whether or not a slip has occurred at the rear wheel 13L. For example, if a value from the velocity sensor of the rear wheel 13L of the wheel unit 200A and a value from the velocity sensor of the rear wheel 13R are different even when the wheel unit 200B is determined to be moving forward on level ground, it is determined that a slip is occurring at the rear wheel 13L. Also, if a slip occurs when a fall braking force is applied as described above, the timing for detecting the acceleration may go off, and the vehicle body may turn. By using the result of determination by the slip determination unit 211, whether the turning of the vehicle body is due to a slip of the rear wheels13 on the outer wheel side can be determined more accurately.

Based on the comparison result of the detected values by the comparison unit 207 or the comparison result of the calculated braking forces, the failure determination unit 213 determines whether there is a failure in the wheel unit 200A. For example, if the braking force of the wheel unit 200A calculated by control unit 201R and the received braking force do not match, there is a possibility that a failure has occurred in the wheel unit 200A. In the determination of the occurrence of a failure by the failure determination unit 213, it is not necessary that the comparison result shows that the braking forces match perfectly, and errors may be allowed. Further, a threshold for a braking force error may be determined in advance, and it may be determined that a failure has occurred when, for example, the calculated braking force and the received braking force deviate from each other by 30 percent or more. If the failure determination unit 213 determines that a failure has occurred, the failure determination unit 213 may notify the user of the occurrence. Further, bi-directional communication between the wheel unit 200A and the wheel unit 200B may be enabled, and in the event of a failure, an instruction to maximize the braking force of the rear wheel 13L and to maximize the braking force of the rear wheel 13R may be transmitted by the wheel unit 200B to the wheel unit 200A.

As a variation, bi-directional communication may be enabled between the wheel unit 200A and the wheel unit 200B, and both the wheel unit 200A and the wheel unit 200B may be provided with a transmission unit, a reception unit, a comparison unit, an abnormality detection unit, a slip determination unit, and a failure determination unit. Such a configuration allows the wheel unit 200A to detect abnormalities, etc., in the wheel unit 200B and the wheel unit 200B to detect abnormalities, etc., in the wheel unit 200A.

[INDUSTRIAL APPLICABILITY]

The present invention has industrial applicability in the field of electric braking mechanism-equipped vehicles.

[REFERENCE SIGNS LIST]

13 rear wheel, 100 walker, 100A, 100B wheel unit, 101 control unit, 103 sensor group, 105 braking mechanism, 107 calculation unit, 111 angular velocity sensor, 113 acceleration sensor, 115 velocity sensor, 200 walker, 200A, 200B wheel unit, 201 control unit, 203 transmission unit, 205 reception unit, 207 comparison unit, 209 abnormality detection unit, 211 slip determination unit, 213 failure determination unit

## Claims

1. An electric braking mechanism-equipped vehicle comprising:

   a first wheel provided on one side of a vehicle body in a vehicle width direction and a second wheel provided on the other side in the vehicle width direction;
   a first braking mechanism configured to apply braking force to the first wheel;
   a first detection unit configured to detect at least one of the acceleration and angular velocity of the first wheel;
   a first calculation unit configured to calculate the braking force applied by the first braking mechanism based on a detected value from the first detection unit;
   a first control unit configured to control the first braking mechanism based on a calculation result from the first calculation unit;
   a second braking mechanism configured to apply braking force to the second wheel;
   a second detection unit configured to detect at least one of the acceleration and angular velocity of the second wheel;
   a second calculation unit configured to calculate the braking force applied by the second braking mechanism based on a detected value from the second detection unit using the same algorithm used by the first calculation unit; and
   a second control unit configured to control the second braking mechanism based on a calculation result from the second calculation unit.

2. The electric braking mechanism-equipped vehicle according to claim 1, wherein

   the first detection unit includes a first turning detection unit configured to detect turning of the first wheel,
   the second detection unit includes a second turning detection unit configured to detect turning of the second wheel, and
   at the time of the turning of the vehicle body, the first calculation unit calculates braking force using a detection result from the first turning detection unit, and the second calculation unit calculates braking force using a detection result from the second turning detection unit.

3. The electric braking mechanism-equipped vehicle according to claim 1, wherein the algorithm is configured such that braking force on the outer wheel side becomes stronger than braking force on the inner wheel side at the time of turning of the vehicle body.

4. The electric braking mechanism-equipped vehicle according to any one of claims 1 through 3, wherein

   the first detection unit includes a first lateral inclination detection unit configured to detect a lateral inclination of the first wheel,

the second detection unit includes a second lateral inclination detection unit configured to detect a lateral inclination of the second wheel, and

when the vehicle body is laterally inclined, the first calculation unit calculates braking force using a detection result from the lateral inclination detection unit, and the second calculation unit calculates braking force using a detection result from the second lateral inclination detection unit.

5. The electric braking mechanism-equipped vehicle according to claim 4, wherein the algorithm is configured such that braking force on the upper side of the inclination becomes stronger than braking force on the lower side of the inclination when the vehicle body is laterally inclined.

6. The electric braking mechanism-equipped vehicle according to any one of claims 2 through 5, wherein the first calculation unit and the second calculation unit each calculate braking force by taking into account a velocity braking force calculated based on the velocity of the vehicle body, a pitch angle braking force calculated based on the pitch angle of the vehicle body, and an acceleration braking force calculated based on the acceleration of the vehicle body.

7. The electric braking mechanism-equipped vehicle according to any one of claims 1 through 6, wherein the first calculation unit and the second calculation unit calculate braking force based on the motion state of the same reference point of the vehicle body.

8. The electric braking mechanism-equipped vehicle according to claim 2, wherein

the first detection unit includes a first inclination detection unit configured to detect an inclination of the first wheel,
the second detection unit includes a second inclination detection unit configured to detect an inclination of the second wheel,
the electric braking mechanism-equipped vehicle further comprises:

a first inclination memory unit configured to store a detection result from the first inclination detection unit; and
a second inclination memory unit configured to store a detection result from the second inclination detection unit,
the first calculation unit calculates braking force by taking into account chronological change in a detection result recorded in the first inclination memory unit when a detected value from the first turning detection unit is equal to or more than a predetermined value, and
the second calculation unit calculates braking force by taking into account chronological change in a detection result recorded in the second inclination memory unit when a detected value from the second turning detection unit is equal to or more than a predetermined value.

9. The electric braking mechanism-equipped vehicle according to any one of claims 1 through 7, wherein

the algorithm is configured to increase an acceleration braking force when the acceleration of the vehicle body exceeds a first threshold and
configured to increase the acceleration braking force of a wheel on the outer wheel side when the acceleration of the vehicle body exceeds a second threshold lower than the first threshold at the time of turning of the vehicle body.

10. The electric braking mechanism-equipped vehicle according to claim 9, wherein the algorithm is configured to reduce the acceleration braking force when a condition for releasing the acceleration braking force is met and configured to reduce the braking force of a wheel on the inner wheel side if the vehicle body turns when the acceleration braking force is reduced.

11. An electric braking mechanism-equipped vehicle comprising:

a first wheel and a second wheel provided on respective sides of a vehicle body in a vehicle width direction;
a first braking mechanism configured to apply braking force to the first wheel;
a first detection unit configured to detect at least one of the acceleration and angular velocity of the first wheel;
a first calculation unit configured to calculate the braking force applied by the first braking mechanism based on a detected value from the first detection unit:

a first control unit configured to control the first braking mechanism based on a calculation result from the first calculation unit;

a transmission unit configured to transmit at least one of the braking force calculated by the first calculation unit and the detected value from the first detection unit;

a second braking mechanism configured to apply braking force to the second wheel;

a second detection unit configured to detect at least one of the acceleration and angular velocity of the second wheel;

a second calculation unit configured to calculate the braking force applied by the second braking mechanism based on a detected value from the second detection unit using the same algorithm used by the first calculation unit;

a second control unit configured to control the second braking mechanism based on a calculation result from the second calculation unit;

a reception unit configured to receive information transmitted from the transmission unit; and

a comparison unit configured to compare at least either the braking force calculated by the second calculation unit with braking force received by the reception unit or the detected value from the second detection unit with a detected value received by the reception unit.

12. The electric braking mechanism-equipped vehicle according to claim 11, comprising an abnormality detection unit configured to detect abnormality of the first wheel based on a comparison result from the comparison unit.

13. The electric braking mechanism-equipped vehicle according to claim 11, comprising a slip determination unit configured to determine whether slipping of the first wheel has occurred.

14. The electric braking mechanism-equipped vehicle according to claim 11, comprising a failure determination unit configured to determine whether a failure has occurred in the first wheel.

15. The electric braking mechanism-equipped vehicle according to claim 14, wherein the second control unit increases braking force when the failure determination unit determines that there is a failure in the first wheel.

16. A wheel unit for an electric braking mechanism-equipped vehicle comprising:

a wheel attached to a vehicle body;

a braking mechanism configured to apply braking force to the wheel;

a detection unit configured to detect at least one of the acceleration and angular velocity of the wheel;

a calculation unit configured to calculate the braking force applied by the braking mechanism based on a detected value from the detection unit; and

a control unit configured to control the braking mechanism based on a calculation result from the calculation unit.

17. A control program for a wheel unit, the wheel unit comprising:

a wheel attached to a vehicle body;

a braking mechanism configured to apply braking force to the wheel;

a detection unit configured to detect at least one of the acceleration and angular velocity of the wheel;

a calculation unit configured to calculate the braking force applied by the braking mechanism based on a detected value from the detection unit; and

a control unit configured to control the braking mechanism based on a calculation result from the calculation unit, the control program causes a processor to perform:

detecting, by the detection unit, turning of the vehicle body; and

calculating, by the calculation unit, braking force such that when the wheel is on the outer wheel side at the time of the turning, braking force applied to the wheel is stronger than that obtained when the wheel is on the inner wheel side.

18. The control program for a wheel unit according to claim 17, cause the processor to perform:

detecting, by the detection unit, a lateral inclination of the vehicle body; and

calculating, by the calculation unit, braking force such that when the wheel unit is on the outer wheel side at the time of the lateral inclination of the vehicle body, braking force applied to the wheel is stronger than that obtained when the wheel unit is on the inner wheel side.

**19.** The control program for a wheel unit according to claim 17 or 18 configured to cause the calculation unit to calculate braking force by taking into account a velocity braking force calculated based on the velocity, a pitch angle braking force calculated based on the pitch angle of the vehicle body, and an acceleration braking force calculated based on the acceleration of the vehicle body.

FIG.1

FIG.2

FIG.3

101R 100A 103R 105R

WHEEL UNIT

| CONTROL UNIT | SENSOR GROUP | BRAKING MECHANISM |

| CALCULATION UNIT | BATTERY | REAR WHEEL |

107R 109R 13R

101L 103L 105L

WHEEL UNIT

| CONTROL UNIT | SENSOR GROUP | BRAKING MECHANISM |

| CALCULATION UNIT | BATTERY | REAR WHEEL |

107L 109L 13L

100B

# FIG.4

FIRST WHEEL UNIT — 101

CONTROL UNIT
- PROCESSOR — 101A
- FIRST MEMORY UNIT — 101B
- SECOND MEMORY UNIT — 101C

SENSOR GROUP — 103
- ACCELERATION SENSOR — 113
- ANGULAR VELOCITY SENSOR — 115
- VELOCITY SENSOR — 111

BRAKING MECHANISM — 105

CALCULATION UNIT — 107

BATTERY — 109

REAR WHEEL — 13

EP 4 082 509 A1

FIG.5

FIG.6

FIG.7

FIG.8

FIG.9

FIG.10

FIG.11

FIG.12

FIG.13

WHEEL UNIT

| CONTROL UNIT | SENSOR GROUP | BRAKING MECHANISM |

| TRANSMISSION UNIT | CALCULATION UNIT | BATTERY | REAR WHEEL |

201R    200A    103R    105R

200

203    107R    109R    13R

205

WHEEL UNIT

| RECEPTION UNIT | CONTROL UNIT | SENSOR GROUP | BRAKING MECHANISM |

SLIP DETERMINATION UNIT — 211

ABNORMALITY DETECTION UNIT — 209

| COMPARISON UNIT | CALCULATION UNIT | BATTERY | REAR WHEEL |

FAILURE DETERMINATION UNIT — 213

201L    103L    105L

207    107L    109L    13L

100B

EP 4 082 509 A1

**INTERNATIONAL SEARCH REPORT**

| International application No. |
|---|
| PCT/JP2020/048150 |

A. CLASSIFICATION OF SUBJECT MATTER
A61H 3/04(2006.01)i; B6017/18(2006.01)i; B60T 17/18(2006.01)i; B62B
3/00(2006.01)i; B62B 5/04(2006.01)i; B60T 8/17(2006.01)i; B60T
8/1755(2006.01)i; B60T 8/96(2006.01)i
FI:     B60T8/17 Z; B60T8/96; B60T8/1755 Z; B60T17/18; B62B3/00 G;
        B62B5/04 A; A61H3/04; B6017/18
According to International Patent Classification (IPC) or to both national classification and IPC

B. FIELDS SEARCHED

Minimum documentation searched (classification system followed by classification symbols)
A.61H3/04; B6017/18; B60T17/18; B62B3/00; B62B5/04; B60T8/17; B60T8/1755;
B60T8/96

Documentation searched other than minimum documentation to the extent that such documents are included in the fields searched
Published examined utility model applications of Japan          1922–1996
Published unexamined utility model applications of Japan        1971–2021
Registered utility model specifications of Japan                1996–2021
Published registered utility model applications of Japan        1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-46697 A (TOYOTA MOTOR CORP.) 17 March 2014 (2014-03-17) paragraphs [0019]-[0072], fig. 1-7 | 1-19 |
| A | WO 2014/188726 A1 (NABTESCO CORPORATION) 27 November 2014 (2014-11-27) paragraphs [0056]-[0110], fig. 1-13 | 1-19 |
| A | JP 2006-160082 A (SONY CORP.) 22 June 2006 (2006-06-22) fig. 3-6 | 1-19 |
| A | JP 2016-137135 A (SHARP CORP.) 04 August 2016 (2016-08-04) fig. 1-23 | 1-19 |
| A | US 2006/0162986 A1 (DELPHI TECHNOLOGIES INC.) 27 July 2006 (2006-07-27) fig. 1 | 1-19 |

☐  Further documents are listed in the continuation of Box C.        ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 January 2021 (25.01.2021) | 09 February 2021 (09.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/048150

| Patent Documents referred in the Report | Publication Date | Patent Family | Publication Date |
|---|---|---|---|
| JP 2014-46697 A | 17 Mar. 2014 | US 2014/0067178 A1 paragraphs [0039]-[0093], fig. 1-7 CN 103660999 A | |
| WO 2014/188726 A1 | 27 Nov. 2014 | EP 3000456 A1 paragraphs [0017]-[0112], fig. 1-13 | |
| JP 2006-160082 A | 22 Jun. 2006 | (Family: none) | |
| JP 2016-137135 A | 04 Aug. 2016 | (Family: none) | |
| US 2006/0162986 A1 | 27 Jul. 2006 | EP 1672505 A2 | |

Form PCT/ISA/210 (patent family annex) (January 2015)

**EP 4 082 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016187485 A